# FASCICULE DE BREVET EUROPEEN

(11) **EP 4 036 253 B1**
(45) Date de publication et mention de la délivrance du brevet: **20.03.2024**
(21) Numéro de dépôt: 22153723.6
(22) Date de dépôt: 27.01.2022
(51) Int. Cl.: C21C 7/00, C21C 7/072, C21C 7/10, C22B 7/02, C22B 7/04, C22B 19/04, C22B 19/34, C22B 47/00, F27D 3/16, F27D 17/00, F27D 27/00, H01M 10/54, C22B 1/00, H01M 10/34

(54) **VALORISATION DE PILES**
VERWERTUNG VON BATTERIEN
RECOVERY OF BATTERIES

(30) Priorité: 28.01.2021 FR 2100830
(43) Date de publication de la demande: 03.08.2022
(73) Titulaire: Erasteel, 75015 Paris (FR)
(72) Inventeur: DUFOUR, Jean-Pierre, 87230 Les Cars (FR)
(74) Mandataire: Cabinet Beau de Loménie

(56) Documents cités:
- EP-A1- 3 511 431
- FR-A1- 3 041 820
- US-A- 5 667 553
- US-A1- 2002 100 345
- US-A1- 2020 277 704

## Description

La présente invention concerne un four industriel et un procédé de valorisation combinée de piles alcalines et/ou salines (PAS) usagées, et éventuellement d'accumulateurs Nickel-Métal-Hydrure (NiMH) usagés.

### L'état de la technique

Les piles et accumulateurs sont produits par des sociétés spécialisées (Varta, Philips, Energizer,...). Ces sociétés sont les « metteurs sur le marché » des piles et accumulateurs (batteries). Le recyclage est organisé et encadrés par des éco-organismes liés aux ministères environnementaux en trois activités :
- la collecte
- le tri,
- la valorisation des matières (métaux) contenus dans les piles et accumulateurs.
La collecte est directement réalisée par les éco-organismes, les deux autres activités sont confiées à des organismes, associations ou entreprises spécialisées.

Plus de 140 000T de piles alcalines et salines sont vendus en Europe chaque année (27 pays de l'UE). Le taux de collecte actuel est d'environ 40% à 45% en Europe.

Les piles salines sont majoritairement composées par un couple électrochimique qui transforme l'énergie chimique réactionnelle en énergie électrique : Zinc (Zn) / Dioxyde de manganèse (MnO2), le boitier est généralement composé de zinc qui forme l'anode de la pile. Les bornes positives et négatives sont formées par un alliage Cuivre-Nickel.

Les piles alcalines fonctionnent avec le même couple électrochimique (Zn/MnO2), le boitier de piles est constitué d'acier (alliage Fer/Carbone - Fe/C), les bornes positives et négatives sont un alliage Cuivre-Nickel. La proximité analytique de ces deux types de piles explique qu'elles sont recyclées ensemble avec des contenus élémentaires typiques : Zn (15 à 25%), MnO2 (20 à 40%), Fe (15 à 25%).

Dans les deux cas, ces piles sont commercialisées dans plusieurs formats : des gros boitiers jusqu'aux formats bâtons.

Il existe deux types de procédés pour valoriser les éléments métalliques contenus dans les piles alcalines et salines, soit des procédés non-dédies (ou par dilution), ou des procédés dédiés. Les procédés non-dédiés concernent des procédés industriels ayant un autre but principal que de valoriser des piles ou accumulateurs. La valorisation de piles ou accumulateurs se greffe sur le procédé industriel principal, seule une fraction du métal introduit est constituée par des piles ou accumulateurs. Ainsi, de tels procédés ne sont pas dédiés totalement à la valorisation de piles ou d'accumulateurs. Au contraire, dans un procédé dit « dédié » le procédé est alimenté essentiellement, si ce n'est exclusivement, de piles ou d'accumulateurs.

Il existe des procédés non-dédiés ou dédiés permettant la valorisation soit des piles alcalines-salines, soit des accumulateurs NiMH. Cependant, il n'existe pas de procédé de valorisation, non-dédié ou dédié, associant les piles alcalines-salines avec les accumulateurs NiMH.

Concernant les piles alcalines et salines, un procédé non dédié est par exemple décrit dans la demande de brevet WO 2015/086914 A1. Un tel procédé utilise les piles alcalines-salines comme élément de charge pour apporter du fer et principalement du manganèse notamment dans les fontes. Cette demande décrit aussi un système de filtration complet permettant d'épurer les gaz de procédé. Cependant les poussières qui comprennent de l'oxyde de zinc (ZnO) ne sont récupérées par le système de filtration qu'avec une teneur à environ 20% d'oxyde de zinc, ce qui limite fortement leur intérêt commercial.

La demande de brevet WO 2018/100254 A1 propose un procédé de fusion des piles alcalines et salines utilisant un réacteur tournant pour y charger des piles, les faire fondre à l'aide d'un bruleur pour en fondre une petite quantité. Cette fusion génère un laitier surfacique destiné à réceptionner les piles alcalines et salines, lesquelles sont ajoutées par gravité. L'ensemble de la charge est agité par la mise en rotation du réacteur et une injection d'oxygène via une lance. Cette injection est aussi utilisée pour réchauffer le bain liquide.

Avec ce procédé deux produits sont obtenus : de l'oxyde de zinc (ZnO), et un alliage de type ferromanganèse (avec 35 à 75% de Mn contenu) après réduction de l'oxyde de manganèse contenu dans les piles. Ce procédé atteint une productivité de 0,75 tonnes de piles fondues par heure. Le présent inventeur a constaté les limites de ce procédé qui sont au moins de trois ordres :
- Le réacteur utilisé ou « convertisseur Kaldo » est une technologie abandonnée depuis plusieurs dizaines d'années en raison de son coût d'exploitation très onéreux,
- L'oxyde de manganèse est réduit par du carbone en vue de produire un alliage de ferro-manganèse, cette opération métallurgique est contradictoire avec l'ajout d'oxygène qui au contraire va oxyder les espèces chimiques avide d'oxygène comme le carbone et le manganèse.
- La productivité du procédé est faible, ce qui dégrade encore le coût d'exploitation ramenée à la tonne de piles fondue.

Il existe aussi des procédés dédiés par fusion au moyen d'un four électrique à arc libre de piles alcalines et salines. Ces procédés selon l'état de la technique ne sont pas bien maîtrisés ce qui induit une grande instabilité des compositions chimiques des produits issus du recyclage, ainsi limite les débouchés commerciaux.

Il est aussi connu un procédé de broyage mécanique à froid des piles alcalines et salines en vue de récupérer la fraction riche en fer par aimantation, puis de récupérer l'oxyde zinc via un raffinage au moyen d'un four Waelz. Ce procédé est économique au regard des moyens capitalistiques à engager. En revanche, il présente l'inconvénient d'un taux de recyclage limité à 50%, puisque le manganèse composant majeur des piles alcalines et salines, n'est pas valorisé, il devient un déchet du procédé. Les documents EP 3 511 431 A1, US 2002/100345 A1, FR 3 041820 A1 et US 5 667 553 A divulguent également des procédés de valorisation de piles alcalines ou salines usagées.

Il est connu que les accumulateurs NiMH sont valorisés en suivant deux étapes de procédé : La première est dédiée, elle consiste en un traitement thermique destiné à éliminer les matières volatiles et organiques. Il est réalisé au moyen d'un four à pyrolyse ou d'un four de calcination. La seconde opération consiste à utiliser le concentra de Nickel et de Fer comme élément de charge pour les aciéries.

De manière plus générale, l'ensemble des procédés existants valorisent les espèces chimiques contenues dans les piles ou accumulateurs de manière indépendante par types de piles ou d'accumulateurs. Cette approche sélective réduit fortement les possibilités métallurgiques de valorisation des métaux contenus et ne permet pas d'obtenir des analyses élémentaires des produits valorisés suffisamment attractives aux plans des propriétés d'usage.

Le présent inventeur a constaté qu'il n'existait aucun procédé de fusion direct associant des piles alcalines-salines avec des accumulateurs NiMH et permettant de valoriser au mieux les éléments métalliques, et en particulier le Nickel, le Manganèse et le Zinc.

### Buts de l'invention

La présente invention a pour but de résoudre le problème technique consistant à fournir un four industriel et un procédé industriel de valorisation combinée de piles alcalines et/ou salines (PAS) usagées, et éventuellement d'accumulateurs Nickel-Métal-Hydrure (NiMH) usagés.

La présente invention a pour but de résoudre le problème technique consistant à fournir un four industriel et un procédé industriel valorisant une combinaison de piles alcalines et/ou salines (PAS) et d'accumulateurs Nickel-Métal-Hydrure (NiMH), de préférence le procédé et le four étant dédié à la valorisation de ces piles et accumulateurs.

La présente invention a pour but de résoudre le problème technique consistant à fournir un four industriel et un procédé industriel améliorant la valorisation de piles et/ou accumulateurs en particulier en cherchant à valoriser au mieux les métaux contenus dans les piles et/ou accumulateurs.

La présente invention a pour but de résoudre le problème technique consistant à fournir un four industriel et un procédé industriel avec un taux de recyclage supérieur à 50 %, et de préférence supérieur à 75%, des piles et accumulateurs en accord avec la règlementation de l'Union Européenne en vigueur (Directive 2006/66/CE).

La présente invention a pour but de résoudre le problème technique consistant à fournir un four industriel et un procédé industriel répondant aux problématiques exposées ci-dessus de manière industrielle, fiable, économique et respectueux de l'environnement.

### Description détaillée de l'invention

La présente invention permet de résoudre les problèmes techniques précités.

En particulier, l'invention concerne un procédé de valorisation de piles alcalines et/ou salines usagées, éventuellement additionnées d'accumulateurs NiMH usagés, ledit procédé étant décrit dans les revendications 1-8.

La présente invention concerne aussi un dispositif de valorisation de piles alcalines et/ou salines usagées, éventuellement additionnées d'accumulateurs NiMH usagés, ledit dispositif étant décrit dans les revendications 9-13.

Typiquement, le procédé comprend un ou plusieurs cycles, le début d'un cycle comprenant la constitution d'une charge de démarrage du bain de métal liquide et la fin d'un cycle comprenant la coulée d'un alliage de ferronickel à partir du bain métallique liquide.

De préférence, le procédé selon l'invention est mis en oeuvre de façon semi-continue, de préférence sous forme de cycles.

En particulier, la présente invention permet de valoriser des piles alcalines et/ou salines et éventuellement d'accumulateurs Nickel-Métal-Hydrure (NiMH). Selon une variante particulièrement avantageuse, des piles et accumulateurs NiMH sont ajoutés de manière combinée.

Dans la suite on parle indifféremment de « piles et d'accumulateurs », mais il est bien précisé que la présence d'accumulateurs NiMH est optionnelle, bien que la combinaison de PAS et d'accumulateurs NiMH soit préférée. Dans la présente invention, à chaque occurrence, l'expression « piles et accumulateurs » désigne la présence optionnelle d'accumulateurs NiMH, et de préférence une combinaison de piles et accumulateurs.

Ainsi, avantageusement, le dispositif et le procédé selon la présente invention permettent de valoriser une combinaison de piles et d'accumulateurs usagés.

Ainsi, avantageusement, le procédé est particulièrement économique puisqu'une seule opération de fusion permet la séparation poussée des espèces chimiques présentes dans les piles alcalines-salines et les accumulateurs NiMH, et conduit à la création simultanée de trois produits finis à haute valeur d'usage.

L'invention permet de fournir un ferro-alliage de nickel issue du bain métallique liquide, une composition comprenant du monoxyde de manganèse (MnO) issue du laitier et des poussières d'oxyde de zinc issues du traitement (appelé aussi épuration) des gaz.

Typiquement, le procédé selon la présente invention présente une première phase de démarrage de la fusion en début de cycle consistant à former une charge de démarrage du bain métallique liquide dans la cuve du four qui est fondue préalablement à l'ajout continu des piles et des accumulateurs. Une fois la phase de démarrage terminée, le procédé comprend, de préférence en continu, le chargement de piles et/ou accumulateurs par la voûte du four de manière à ce que les piles et/ou accumulateurs s'ajoutent au laitier en surface du bain métallique liquide. Le procédé comprend un soutirage du laitier en surface du bain métallique liquide. Un cycle se termine par une coulée du ferro-alliage de nickel préparé.

Avantageusement, les métaux contenus dans les piles et/ou accumulateurs servent de base pour élaborer un alliage Fer-Nickel avec un taux de Nickel variable en fonction de la part d'accumulateurs NiMH introduite dans le four. En fonction de la disponibilité d'accumulateurs NiMH et des demandes clients, les dosages en nickel sont typiquement dans l'intervalle de concentration de 10% à 25%, et par exemple de 14% à 22%.

Avantageusement, l'alliage de ferronickel comprend plus de 20 % en masse de nickel par rapport à la masse totale de l'alliage, et de préférence moins de 3 % d'autres métaux d'alliage, comme par exemple du cobalt, manganèse, cuivre.

Les quantités proportionnelles de piles alcalines-salines et d'accumulateurs NiMH introduits dans le four sont calculées de manière à obtenir un alliage métallique avec une concentration en Ni supérieur à 20%.

Typiquement, le four de fusion de métal est un four à arc électrique.

Comme indiqué ci-dessus, en début de cycle, il est préférable de constituer une charge de démarrage du bain.

Selon une variante, la phase de démarrage comprend une alimentation par la voûte de piles et/ou accumulateurs usagés.

Selon un mode de réalisation, pour le démarrage de la fusion, le four est chargé en métal ; on parle de « charge de démarrage », qu'elle soit solide ou fondue. Par exemple, les piles et accumulateurs NiMH de plus gros formats auxquels sont éventuellement ajoutés une quantité de chutes de ferrailles non alliées pour former une charge de démarrage qui représente environ 25% de la capacité du four et qui est d'abord fondue avec un laitier de synthèse.

Selon une variante, des chutes de ferrailles non alliées, par exemple représentant environ 25% de la capacité du four, sont fondus pour constituer =la charge de démarrage du bain de métal liquide.

Selon une variante, on peut charger le four en piles et/ou accumulateurs usagés avant le démarrage de la fusion.

Selon une variante avantageuse, on positionne dans le four avant fusion une charge de démarrage constituée ou comprenant un mélange de ferrailles, piles et/ou accumulateurs avec et/ou sans boîtier.

Avantageusement, la fusion de la charge de démarrage est réalisée en combinaison avec une charge de PAS et accumulateurs NiMH par voie aérienne.

Selon une variante avantageuse, les piles et accumulateurs avec boîtier plastique sont chargés dans le four pour constituer la charge de démarrage du bain de métal liquide.

La voûte est en place une fois le four chargé avec la charge de démarrage.

Avantageusement, la charge de démarrage permet de valoriser des piles et/ou accumulateurs de gros formats qui ne peuvent pas être, ou difficilement, alimentés par voie aérienne en surface du laitier.

Ainsi, selon une variante, le procédé selon la présente invention comprend une étape préalable de tri des piles et accumulateurs entre les gros et petits formats, selon qu'ils peuvent être administrés par voie aérienne ou non.

Selon une variante, on ajoute du silicium lors du démarrage de la fusion, par exemple sous forme de silice. Cet ajout de silicium peut être simultané à l'ajout des PAS et accumulateurs NiMH par voie aérienne. On peut par exemple ajouter le silicium sous forme de charge de FeSi. Le silicium est important selon l'invention au titre de réducteur de l'oxyde de nickel.

Selon une variante avantageuse, le démarrage de la fusion permet de former une base de laitier avec le rapport massique MnO/SiO₂ désiré, typiquement MnO/SiO₂ de 1,55 à 1,70, et encore de préférence de 1,6. La quantité de piles et/ou accumulateurs chargés pour la préparation de la charge de démarrage est adaptée à ce rapport massique MnO/SiO₂.

En fin de phase de démarrage, le four comprend un bain métallique liquide surfacé par un laitier.

De préférence, une fois la charge de démarrage fondue, la fusion d'un apport continu ou semi-continu de piles et/ou accumulateurs peut être réalisée.

Avantageusement, l'ajout des piles et/ou accumulateurs est réalisé par déversement par gravité au travers de la voûte du four, de préférence de manière à répartir les piles et/ou accumulateurs à la surface du laitier.

Avantageusement, l'alimentation continue des piles et accumulateurs par voie aérienne peut se réaliser en régime de chargement continu ou semi-continu.

Pour permettre une introduction massive des piles alcalines et salines (PAS) et accumulateurs NiMH, les piles et accumulateurs doivent être admis dans le four de manière à rester à la surface du bain métallique pour permettre la dissolution du boitier pour laisser l'électrolyte et le zinc s'échapper sous forme gazeuse.

Avantageusement, les piles et les accumulateurs sont introduits dans le four au travers d'une voûte en plusieurs points, par exemple trois points d'alimentation de telle manière que les piles et accumulateurs soient déchargés par voie aérienne en tombant sur le bain de métal liquide et/ou le laitier. Ainsi juste après leur chute, les piles et accumulateurs flottent sur le bain de métal liquide et/ou laitier, et se répartissent avantageusement sur la plus grande surface possible. Sous l'effet du contact avec le métal liquide et/ou le laitier liquide, les boitiers métalliques des piles et des accumulateurs vont ramollir et fondre très rapidement de telle façon que les phases gazeuses à basse température (< 950°C) (vapeurs issues de l'électrolyte aqueux, vapeur de zinc, mono-oxyde de carbone, ...) puissent s'échapper depuis la surface du bain liquide. Les gaz s'échappant ainsi, sont traités par un système de traitement des gaz. Avantageusement, la dissolution des boîtiers en flottaison ne provoque pas de détente de vapeur.

Ainsi, avantageusement les piles et accumulateurs sont ajoutés par voie aérienne, de préférence en continu ou semi-continue. Ce système de chargement permet de contrôler les températures sous la voûte et dans le système de traitement des gaz par dosage de la quantité de piles et/ou accumulateurs admis. Ce système de chargement permet aussi de contrôler la quantité de laitier produite et son évacuation régulière, en continu ou semi-continu.

Typiquement, le système de chargement comprend une ligne d'acheminement de piles et accumulateurs depuis une zone de stockage vers la voûte du four. Avantageusement, la quantité de piles et accumulateurs ajoutés au bain métallique liquide est contrôlée. Avantageusement, les quantités de piles et d'accumulateurs introduits dans le four sont calculées de manière à obtenir un ferro-alliage métallique avec une concentration en Ni supérieure à 20%.

Selon une variante préférée, le ferro-alliage obtenu est composé de : 14 à 20% de Nickel, 1 à 2% de Cobalt, 1,5 à 2,5% de cuivre, moins de 3% de Manganèse, le reste étant du Fe, et les impuretés inévitables liées aux matières premières et procédé de préparation.

Selon un mode de réalisation préférée, le chargement comprend également l'apport de silicium et de silice. Cet ajout de silicium et de silice peut être simultané à l'ajout des PAS et accumulateurs NiMH par voie aérienne. Les ajouts de silicium et de silice sont proportionnels à la quantité de piles alcaline et/ou salines introduites.

Après introduction des piles alcalines-salines et des accumulateurs dans le four, les métaux qu'ils contiennent sont dissouts dans le métal liquide et/ou dans le laitier liquide surnageant sous forme d'oxydes métalliques.

Avantageusement, la température du bain métallique liquide est comprise entre 1400°C et 1600°C, de préférence entre 1450°C et 1550°C.

Avantageusement, le brassage du bain liquide métallique liquide est réalisé par un ou plusieurs dispositifs poreux au travers desquels est injecté un gaz inerte vis-à-vis des éléments chimiques du bain métallique liquide.

Le bain métallique liquide comprend des éléments réducteurs, tel que par exemple du carbone et du silicium, qui réduisent les éléments métalliques sous une forme non oxydée, et le brassage du bain liquide met le manganèse en contact avec l'atmosphère oxydante pour produire du MnO dans le laitier.

Avantageusement la combinaison du brassage et de l'oxydation permet de maintenir l'oxyde de manganèse essentiellement dans le laitier.

Avantageusement, le bain métallique liquide comprend du silicium dont la concentration est ajustée pour obtenir dans le laitier un rapport massique MnO/SiO₂ de 1,55 à 1,70.

Le gaz inerte injecté est typiquement de l'azote (N₂).

Avantageusement, le système de brassage comprend un ou plusieurs dispositifs poreux au travers desquels peut être injecté un gaz inerte vis-à-vis des éléments chimiques du métal en fusion.

Selon une variante avantageuse, après introduction des piles alcalines-salines et des accumulateurs dans le four, les métaux qu'ils contiennent sont dissout dans le métal liquide ou dans le laitier liquide surnageant sous forme d'oxydes métalliques. Le partage des métaux concentrés, soit dans le métal liquide, soit oxydés dans le laitier s'effectue par l'action simultanée de deux réducteurs : le carbone endogène provenant des piles et le silicium exogène associé à un brassage énergique du bain liquide.

Avantageusement, selon le procédé selon l'invention, le dioxyde de Manganèse (MnO₂) se transforme en oxyde de Manganèse, typiquement MnO. Ce composé chimique d'une densité plus faible que celle de l'acier liquide flotte en surface du bain liquide. Une faible part de l'oxyde de manganèse est réduite en manganèse métal et se trouve en solution dans le bain d'acier liquide.

Le partage des métaux concentrés, soit dans le métal liquide, soit oxydés dans le laitier s'effectue par l'action simultanée d'éléments réducteurs (carbone présent dans les piles et accumulateurs ajoutés et silicium présent dans la charge de démarrage) et d'un brassage énergique du bain liquide au moyen d'un gaz injecté au travers d'un ou plusieurs dispositifs poreux.

Le procédé selon l'invention comprend ainsi une ré-oxydation de Mn métal en oxyde de Manganèse. Cette ré-oxydation est permise notamment grâce au système de brassage du dispositif et procédé selon l'invention.

Avantageusement, le brassage du bain liquide est assuré par l'injection d'un gaz neutre au travers d'un ou plusieurs dispositifs positionnés dans la sole du four. Sous l'action de brassage du bain, le manganèse est ré-oxydé au contact de l'air présent à la surface du bain liquide. A l'inverse, les autres oxydes métalliques sont réduits par les éléments réducteurs. L'invention permet la réduction quasi-totale du nickel et des autres métaux, à l'exception du manganèse qui reste concentré dans le laitier sous forme oxydé (sous forme de MnO).

Selon un mode de réalisation, le système de brassage est en fonctionnement sur l'ensemble du cycle de fusion (charge de démarrage et chargement continu ou semi-continu).

Avantageusement, le dosage en silicium est ajusté de telle manière que le SiO₂ résultant de la réaction d'oxydation conduise à un rapport massique MnO/SiO₂ de 1,55 à 1,70, et de préférence d'environ 1,6. Un tel rapport permet d'obtenir un laitier fluide, facilement évacuable par surverse. Si besoin, l'ajout de silicium est complété par l'ajout de silice.

Selon un mode de réalisation, le débit de gaz au travers des dispositifs poreux est réglé pour ne pas perturber le soutirage du laitier notamment en fonction du volume du four et de la quantité de bain métallique liquide.

Avantageusement, le four est un four à arc libre spécialement adapté et équipé d'un bouchon poreux disposés dans la sole du four.

Selon une variante, le ou les dispositifs poreux sont des bouchons céramiques poreux disposés dans la sole du four.

Au regard de la forte proportion de dioxyde de Manganèse (MnO₂) contenu dans les piles, une épaisseur importante de laitier MnO-SiO₂ se forme au-dessus du bain métallique liquide. Si cette couche augmente en épaisseur, elle refroidit en surface puis forme une croûte et perturbe la fusion des piles. Ainsi, selon l'invention, avantageusement, on évacue régulièrement le laitier en inclinant le four vers une porte de décrassage par surverse, qui comprend typiquement un bec d'évacuation du laitier.

Ainsi, selon une variante préférée, le système de soutirage comprend un dispositif de surverse du laitier en surface du bain métallique liquide.

Selon une variante avantageuse, le four est animé d'un mouvement contrôlé de basculement. Le mouvement de basculement permet de vidanger le laitier par surverse dans une chaine continue ou semi-continue constituée de lingotières qui circulent sous un bec d'évacuation du laitier. L'épaisseur de laitier surnageant à la surface du bain métallique liquide est contrôlée par la vidange continue ou semi-continue du laitier, de sorte que le chargement du four par déversement des piles alcalines-salines et des accumulateurs soit poursuivie de manière continue ou semi-continue selon l'invention.

Selon une variante, le laitier est récupéré dans un ou plusieurs dispositifs capacitaires.

Selon une variante, le laitier concentré en MnO est déversé en petite quantité (par exemple < 30Kg) dans des lingotières ce qui entraine sa solidification immédiate au contact des lingotières froides. Selon une variante, le laitier (ou concentra de MnO) solidifié se décroche des lingotières sous son propre poids et chute par gravité lors du retournement des lingotières à laitier. Avantageusement, le concentra de MnO est récupéré sous forme de morceaux de petites tailles (par exemple < 0,5 cm³).

Selon la présente invention, le concentra d'oxyde de manganèse présente un taux de MnO supérieur à 20% en masse, et par exemple de 36 à 42%.

Selon une variante préférée, le concentra d'oxyde de manganèse présente un taux de MnO supérieur à 30%, encore de préférence supérieure à 40 % en masse de la masse totale du concentra.

Avantageusement, le laitier présente une composition comprenant plus de 40 % en masse de MnO par rapport à la masse totale du laitier soutiré.

Avantageusement, le four présente une ou plusieurs ouvertures à l'air libre, permettant ainsi la présence d'une atmosphère oxydante dans le four.

Le dispositif selon l'invention comprend un système de traitement des gaz comprenant une admission d'oxygène, et de préférence un dispositif de contrôle de l'admission d'oxygène.

Le système de traitement des gaz comprend un ensemble d'une section refroidie par un fluide réfrigérant et un ou plusieurs filtres et/ou dispositifs de refroidissement éliminant ou retenant les composés polluants et/ou nocifs pour l'être humain ou l'environnement.

Avantageusement, la chaleur régnant sous la voûte du four (par exemple supérieure à 1400°C) et la disponibilité d'oxygène entraine l'oxydation immédiate du Zinc gazeux sous forme d'oxyde de zinc solide (ZnO) avec une forte exothermie. Avantageusement, le brassage du bain liquide permet de dégazer le zinc retenu dans le métal et d'assurer sa séparation poussée sous forme de poussières de ZnO aspirées par le système de traitement des gaz de procédé.

Selon une variante préférée, la voûte du four est refroidie par un fluide réfrigérant, par exemple de l'eau.

Selon une variante préférée, le procédé inclut un dispositif d'admission d'air réglable au niveau de la sortie des gaz du four, typiquement, il est positionné en début, par exemple sur les trois premiers mètres, du conduit de captation des gaz de procédé. Ce dispositif permet avantageusement une oxydation complète du zinc gazeux sous forme de ZnO. On peut ensuite récupérer le zinc sous forme de poussières enrichies en oxyde de zinc sous forme de ZnO.

Avantageusement, l'oxyde de zinc est récupéré des fumées sous forme de poussières comprenant plus de 75%, et de préférence plus de 80 % et par exemple de 77% à 83% en masse de ZnO par rapport à la masse totale des poussières.

Selon un mode de réalisation, le système de traitement des gaz du procédé comprend une première section de canalisation refroidie à l'eau, puis une seconde section en tubes secs, jusqu'aux filtres.

Avantageusement, le traitement des gaz est conduit de manière à oxyder 100% du zinc sous la voûte et sur les premiers mètres de canalisation des gaz du procédé. De préférence, le volume d'air admis dans le système de traitement des gaz est réglé en jouant sur les accès d'air (ouverture partielle de la porte de décrassage, ...).

Avantageusement, les gaz de procédé sont refroidis par dilution d'air frais, avec abaissement de la température du système de filtration.

Avantageusement, la température dans le système de traitement des gaz est abaissée par le système d'admission d'air frais.

Avantageusement, la température du fluide réfrigérant dans la première section de canalisation est abaissée, de préférence à une température inférieure à 95°C.

Avantageusement, les gaz de procédé qui sortent du four à une température au-dessus de 1200°C sont vivement refroidis dans la première section de canalisation, puis sont encore refroidis au contact des gaines sèches dans la seconde section de canalisation avant d'arriver à un refroidisseur de gaz.

Avantageusement, le système de traitement des gaz comprend un refroidisseur de gaz permettant d'abaisser la température des gaz à l'entrée d'un filtre à manches en-dessous de 180°C. Avantageusement, le filtre à manches sépare les particules solides des gaz. Concrètement, les poussières de ZnO sont retenues sur les manches, et les gaz sont aspirés vers un filtre absolu.

Avantageusement, les poussières de ZnO sont « décollées » des manches du filtre à manches par un soufflage périodique à l'air comprimé : c'est le « décolmatage ». Puis les poussières de ZnO sont transférées par exemple par un système de chaine à disques (convoyeur) vers une station de conditionnement qui peut recevoir des Big-Bags collectant les poussières.

Avantageusement, le filtre primaire fonctionne à une température de 120°C à 180°C.

Selon une variante, le dispositif de traitement des gaz comprend un filtre « absolu » qui a pour fonction d'épurer le gaz qui est passé par le filtre des impuretés encore contenues. Typiquement, un filtre « absolu » est composé de deux équipements distincts : un filtre neutre à cartouches papier et un filtre fonctionnel constitué de deux lits de charbons actifs.

La demande de brevet WO 2015/086914 A1 décrit un système de filtration complet permettant un traitement (ou épuration) poussé des gaz de procédé qui peut être mis en oeuvre ici suite à la mise en fusion de piles alcalines et salines et accumulateurs. Un tel système est particulièrement adapté au traitement des gaz produit lors du procédé selon la présente invention et s'échappant du four selon la présente invention. Le système de filtration ou de traitement ou d'épuration des gaz décrit dans la demande de brevet WO 2015/086914 A1 est cité ici par référence. Ainsi, selon une variante le système de traitement des gaz comprend un échangeur de chaleur, suivie d'une filtration primaire, de préférence permettant de récupérer des poussières riches en zinc, suivie d'une cartouche de traitement des gaz comprenant par exemple un échangeur de chaleur, un dispositif de filtration secondaire suivie d'un filtre de charbon actif. Typiquement, ce dispositif de traitement des gaz se termine par une cheminée.

Ainsi, selon la présente invention, avantageusement d'une part on récupère des poussières d'oxydes de zinc (ZnO) issues des piles, et d'autre part on filtre et/ou élimine les métaux lourds et les molécules nocives, par exemple de type dioxines et furanes, qui sont maintenus dans les fumées sortant dans l'atmosphère à des valeurs inférieures aux seuils des normes environnementales en vigueur.

Le dispositif selon la présente invention permet de mettre en oeuvre le procédé de l'invention de manière particulièrement avantageuse.

Avantageusement le procédé et dispositif de la présente invention permet une valorisation simultanée de piles, et en particulier de piles alcalines et/ou salines (PAS), et d'accumulateurs, en particulier d'accumulateurs Nickel-Métal-Hydrure (NiMH).

Avantageusement, le procédé et dispositif selon la présente invention permet de fondre une grande partie des formats de piles et accumulateurs NiMH.

Avantageusement, le procédé et dispositif selon la présente invention permet de valoriser un alliage de ferro-nickel présentant un taux de nickel supérieur à 20 % et présentant moins de 3 % de chacun des autres métaux présents (typiquement cobalt, manganèse, cuivre).

Selon la présente invention, le procédé et dispositif selon la présente invention permet de valoriser un concentra d'oxyde de manganèse ayant un taux de MnO supérieur à 20 %, de préférence supérieur à 30%, typiquement entre 36 et 42%..

Avantageusement, le procédé et dispositif selon la présente invention permet de valoriser des poussières d'oxyde de zinc ayant un taux de ZnO supérieur à 75 %.

Avantageusement, le procédé et dispositif selon l'invention permet de ne sensiblement pas générer de déchets.

Avantageusement, le procédé selon l'invention présente un taux de recyclage pour les piles alcalines-salines supérieur à 75%

Avantageusement, le procédé selon l'invention présente un taux de recyclage pour les accumulateurs NiMH supérieur à 75%

Avantageusement, le procédé selon l'invention est un procédé dédié de valorisation combinée des piles alcalines-salines et des accumulateurs NiMH et permet en une seule opération de fusion de séparer profondément les espèces chimiques présentes dans les piles alcalines-salines et dans les accumulateurs NiMH au moyen d'un four à arc. Il pallie les inconvénients des procédés existants.

Avantageusement, le procédé et dispositif selon l'invention permet la création simultanée de trois produits à haute valeur d'usage et obtenus avec une bonne reproductibilité analytique :
∘ Un alliage de type Ferro-Nickel avec un taux de Ni supérieur à 20%, et pour lequel les autres métaux d'alliages (Cobalt, Manganèse, Cuivre, ...) sont chacun inférieur à 3%,
∘ Un concentra d'oxyde manganèse avec un taux de MnO supérieur à 30 %,
∘ Des poussières d'oxyde de zinc avec un taux de ZnO supérieur à 75%,

Avantageusement, le procédé et dispositif selon l'invention permet que les trois produits marchands soient délivrés directement sous un format commercialisable sans aucune opération complémentaire.

Avantageusement, le procédé et dispositif selon la présente invention sont dits industriels puisqu'ils permettent de valoriser plusieurs tonnes de piles par cycle, et par exemple plus de 30 tonnes de piles alcalines et salines et plus de 10 tonnes d'accumulateurs NiMH par cycle. Un tel procédé permet par exemple de fournir par cycle plus de 10 tonnes d'alliage de ferronickel, plus de 10 tonnes de concentra de MnO et plus de 5 tonnes de poussières de ZnO. Ces quantités d'alliage de concentra et de poussières peuvent être doublées. Avantageusement, le procédé et dispositif selon l'invention permet de fondre avec une cadence > 6T/h les piles alcalines-salines et les accumulateurs NiMH

### Exemple

### Constitution d'une charge de démarrage

On constitue une charge de démarrage avec les éléments donnés au tableau 1 ci-dessous en respectant la nature et le poids des constituants.

La charge de démarrage représente de 25 à 40% de la capacité du four après fusion.

**[Table 1]**

| Constituants de la charge | Quantité (Kg) |
|---|---|
| Piles Alcalines-Salines - gros formats | 1000 |
| Accumulteurs NiMh - gros formats | 3000 |
| Toles de fer | 3500 |
| Ferro-silicium | 250 |
| Total 1 | 7750 |

### Fonte de la charge de démarrage

La température en sortie filtre doit être comprise entre 80 et 140°C en fin de fusion. Si possible > 100°C.

On contrôle l'état du bain en fin de fusion par prise de température. Elle doit être comprise entre 1450°C et 1550°C.

### Démarrage du chargement continu

Le chargement des PAS et accumulateurs NiMH à cadence progressive à 2T/h (5 à 10min), puis 4T/h. Le four est en position horizontale (0°), jusqu'à atteindre une température en sortie filtre > 100°C.

### Constitution typique d'un chargement en mode continu,

Les constituants sont introduits dans le four en quantité proportionnelle de la charge, selon le tableau 2.

**[Table 2]**

| Constituants de la charge | Quantité (Kg) |
|---|---|
| Piles Alcalines-Salines - petits formats | 45000 |
| Accumulteurs NiMH - petits formats | 8550 |
| Ferro-silicium | 900 |
| Silice/Quartz/Silice (SiO2) | 7750 |
| Total 2 | 62200 |
| | |
| Total poids des entrants | 69950 |

### Chargement continu

Le chargement des piles et accumulateurs NiMH est réalisé à cadence régulière de 5T/h puis Jusqu'à 6,5T/h (60 min) ; le four est en position horizontale.

L'admission d'oxygène en sortie de gaz est fermée de manière à trouver un équilibre de la température filtre entre 100°C et 170°C, et en maintenant la température de circulation d'eau sur la première section de canalisation des gaz en dessous de 95°C (dans la voûte du four).

Le laitier est évacué très régulièrement en basculant le four toutes les 30min pour démarrer la vidange du laitier. Dès que le laitier commence à couler, on alterne la position du four entre 0° et 7° par rapport à l'horizontale pour assurer l'évacuation du laitier. On préfère maintenir la cadence de chargement au niveau nominal durant cette phase. Au besoin, on peut abaisser la cadence de chargement pour gérer la coulée laitier, et revenir à la cadence nominale dès que la situation de coulée du laitier est stabilisée.

Durant la phase de chargement continu, on peut prélever et analyser du métal, analyser du laitier et prendre la température du bain liquide.

La température du métal liquide est située idéalement entre 1450°C et 1550°C.

Les prélèvements permettent de contrôler : d'une part le taux de Ni dans le métal, d'autre part le ratio MnO/SiO₂ dans le laitier,
* Pour augmenter ou réduire le taux de Ni dans le métal, il convient d'ajuster la proportion de NiMH dans l'ajout de piles et accumulateurs,
* Pour ajuster le ratio MnO/SiO₂, il convient d'augmenter ou réduire la proportion de sable (SiO₂) avec l'ajout de piles et accumulateurs.

### Coulée du métal puis réglage des électrodes

On réchauffe le métal entre 1550°C et 1625°C pour la coulée en poche et lingotage.

Puis on règle les électrodes avant chargement panier.

On nettoie les trémies de collecte du ZnO.

A chaque étape, l'admission d'air en sortie des gaz de four est réglée pour adapter le débit à l'oxydation de Zn en ZnO.

### Analyses typiques des produits sortants (Tableau 3)

**[Table 3]**

| | | | | | | | Quantités (Kg) |
|---|---|---|---|---|---|---|---|
| Alliage | Ni | Co | Mn | Cu | Fer | Autres | 20000 |
| | 20,4% | 1,8% | 1,5% | 2,4% | 71,2% | 2,6% | |
| | | | | | | | |
| Laitier | MnO | SiO2 | FeO | Autres | MnO/SiO2 | | 28500 |
| | 40,0% | 24,0% | 8,5% | 27,5% | 1,67 | | |
| | | | | | | | |
| Poussières | ZnO | FeO | Autres | | | | 11400 |
| | 81,0% | 3,0% | 16,0% | | | | |

## Revendications

1. Procédé de valorisation de piles alcalines et/ou salines usagées, éventuellement additionnées d'accumulateurs NiMH usagés, ledit procédé comprenant :
- l'ajout de piles alcalines et/ou salines usagées, éventuellement additionnées d'accumulateurs NiMH usagés, en surface d'un laitier surfaçant un bain métallique liquide, l'ajout des piles, et/ou éventuellement des accumulateurs, apportant au moins des éléments métalliques comprenant du fer, du nickel, du zinc et du manganèse au bain métallique liquide, l'ajout des piles et éventuellement des accumulateurs étant mis en oeuvre dans un four de fusion de métal comprenant une atmosphère oxydante ; l'ajout étant additionné de silicium (Si);
ledit bain métallique liquide comprenant des éléments réducteurs qui réduisent les éléments métalliques sous une forme non oxydée ;
- le brassage du bain métallique liquide mettant en contact le bain métallique liquide, dont le manganèse, avec l'atmosphère oxydante du four pour oxyder le manganèse et produire du MnO dans le laitier ;
- le soutirage du laitier dans lequel le manganèse est oxydé, ledit laitier soutiré présentant une composition comprenant plus de 20 % en masse de MnO par rapport à la masse totale du laitier soutiré;
- la récupération des gaz s'échappant du bain métallique liquide et/ou du laitier, lesdits gaz comprenant du zinc, et son oxydation en oxyde de zinc, typiquement ZnO.

2. Procédé, selon la revendication 1, **caractérisé en ce qu'**il comprend un ou plusieurs cycles, le début d'un cycle comprenant la constitution d'une charge de démarrage du bain de métal liquide et la fin d'un cycle comprenant la coulée d'un alliage de ferronickel à partir du bain métallique liquide.

3. Procédé, selon la revendication 2, **caractérisé en ce que** l'alliage de ferronickel comprend plus de 20 % en masse de nickel par rapport à la masse totale de l'alliage, et de préférence moins de 3 % d'autres métaux d'alliage, comme par exemple du cobalt, manganèse, cuivre.

4. Procédé, selon l'une quelconque des revendications précédentes, **caractérisé en ce que** le laitier présente une composition comprenant plus de 40 % en masse de MnO par rapport à la masse totale du laitier soutiré.

5. Procédé, selon l'une quelconque des revendications précédentes, **caractérisé en ce que** l'oxyde de zinc est récupéré des fumées sous forme de poussières comprenant plus de 80 % en masse de ZnO par rapport à la masse totale des poussières.

6. Procédé, selon l'une quelconque des revendications précédentes, **caractérisé en ce que** l'ajout des piles et/ou accumulateurs est réalisé par déversement par gravité au travers de la voûte du four, de préférence de manière à répartir les piles et/ou accumulateurs à la surface du laitier.

7. Procédé, selon l'une quelconque des revendications précédentes, **caractérisé en ce que** le brassage du bain liquide métallique liquide est réalisé par un ou plusieurs dispositifs poreux au travers desquels est injecté un gaz inerte vis-à-vis des éléments chimiques du bain métallique liquide.

8. Procédé, selon l'une quelconque des revendications précédentes, **caractérisé en ce que** le bain métallique liquide comprend du silicium dont la concentration est ajustée pour obtenir dans le laitier un rapport massique MnO/SiO₂ de 1,55 à 1,70.

9. Dispositif de valorisation de piles alcalines et/ou salines usagées, éventuellement additionnées d'accumulateurs NiMH usagés, ledit dispositif comprenant :
- un four de fusion de métal comprenant ou destiné à comprendre un bain métallique liquide comprenant au moins du fer, du nickel, et du manganèse, ledit bain métallique liquide étant surfacé par un laitier comprenant du manganèse sous forme oxydée et de la silice, ledit four comprenant en partie haute une voûte et en partie basse une cuve comprenant ou destinée à comprendre le métal en fusion ;
- un système de chargement configuré pour le chargement de piles alcalines et/ou salines usagées, éventuellement additionnées d'accumulateurs NiMH usagés, par la voûte du four ;
- un système de brassage du bain métallique liquide dans la cuve ;
- un système de soutirage configuré pour soutirer du laitier en surface du bain métallique liquide :
- un système d'oxydation des gaz dans la voûte du four ;
- un système de traitement des gaz oxydés dans la voûte du four, ledit système de traitement des gaz comprenant une admission d'oxygène et un ensemble d'une section refroidie par un fluide réfrigérant et un ou plusieurs filtres.

10. Dispositif, selon la revendication 9, **caractérisé en ce que** le four de fusion de métal est un four à arc électrique.

11. Dispositif, selon l'une quelconque des revendications 9 à 10, **caractérisé en ce que** le système de brassage comprend un ou plusieurs dispositifs poreux au travers desquels peut être injecté un gaz inerte vis-à-vis des éléments chimiques du métal en fusion.

12. Dispositif, selon l'une quelconque des revendications 9 à 11, **caractérisé en ce que** le système de soutirage comprend un dispositif de surverse du laitier en surface du bain métallique liquide.

13. Dispositif, selon l'une quelconque des revendications 9 à 12, **caractérisé en ce que** le système de traitement des gaz comprend un dispositif de contrôle de l'admission d'oxygène.

## Patentansprüche

1. Verfahren zur Verwertung verbrauchter Alkali- und/oder Salzbatterien, gegebenenfalls unter Zugabe verbrauchter NiMH-Akkumulatoren, wobei das Verfahren umfasst:
- das Zusetzen verbrauchter Alkali- und/oder Salzbatterien, gegebenenfalls unter Zugabe verbrauchter NiMH-Akkumulatoren, auf der Oberfläche einer oberflächenaktiven Schlacke eines flüssigen Metallbads, wobei der Zusatz der Batterien und/oder gegebenenfalls der Akkumulatoren dem flüssigen Metallbad wenigstens metallische Elemente bringt, die Eisen, Nickel, Zink und Mangan umfassen, wobei das Zusetzen der Batterien und gegebenenfalls der Akkumulatoren in einem Metallschmelzofen durchgeführt wird, der eine oxidative Atmosphäre umfasst; wobei dem Zusatz mit Silizium (Si) zugegeben wird;
wobei das flüssige Metallbad Reduktionselemente umfasst, die die metallischen Elemente in eine nicht oxidierte Form reduzieren;
- das Rühren des flüssigen Metallbads, wodurch das flüssige Metallbad, darunter Mangan, mit der oxidativen Atmosphäre des Ofens in Kontakt versetzt wird, um das Mangan zu oxidieren und MnO in der Schlacke zu erzeugen;
- das Entnehmen der Schlacke, in welcher das Mangan oxidiert hat, wobei die entnommene Schlacke eine Zusammensetzung aufweist, die über 20 Ma% MnO im Verhältnis zur Gesamtmasse der entnommenen Schlacke umfasst;
- das Rückgewinnen der aus dem flüssigen Metallbad und/oder der Schlacke entwichenen Gase, wobei die Gase Zink umfassen, und dessen Oxidation zu Zinkoxid, in typischer Weise ZnO.

2. Verfahren nach Anspruch 1, **dadurch gekennzeichnet, dass** es einen oder mehrere Zyklen umfasst, wobei der Beginn eines Zyklus die Bildung einer Startcharge des flüssigen Metallbades umfasst und das Ende eines Zyklus das Gießen einer Ferronickellegierung auf der Basis des flüssigen Metallbads umfasst.

3. Verfahren nach Anspruch 2, **dadurch gekennzeichnet, dass** die Ferronickellegierung über 20 Ma% Nickel im Verhältnis zur Gesamtmasse der Legierung und vorzugsweise unter 3 % andere Legierungsmetalle wie zum Beispiel Kobalt, Mangan, Kupfer umfasst.

4. Verfahren nach einem der vorangehenden Ansprüche, **dadurch gekennzeichnet, dass** die Schlacke eine Zusammensetzung aufweist, die über 40 Ma% MnO im Verhältnis zur Gesamtmasse der entnommenen Schlacke umfasst.

5. Verfahren nach einem der vorangehenden Ansprüche, **dadurch gekennzeichnet, dass** das Zinkoxid aus den Gasen in Form von Stäuben zurückgewonnen wird, die über 80 Ma% ZnO im Verhältnis zur Gesamtmasse der Stäube umfassen.

6. Verfahren nach einem der vorangehenden Ansprüche, **dadurch gekennzeichnet, dass** das Zusetzen der Batterien und/oder Akkumulatoren durch Einleiten durch Schwerkraft durch das Ofengewölbe erfolgt, vorzugsweise so, dass die Batterien und/oder Akkumulatoren auf der Oberfläche der Schlacke verteilt werden.

7. Verfahren nach einem der vorangehenden Ansprüche, **dadurch gekennzeichnet, dass** Rühren des flüssigen Flüssigmetallbads von einer oder mehreren porösen Vorrichtungen durchgeführt wird, durch die ein gegenüber den chemischen Elementen des flüssigen Metallbads inertes Gas eingeleitet wird.

8. Verfahren nach einem der vorangehenden Ansprüche, **dadurch gekennzeichnet, dass** das flüssige Metallbad Silizium umfasst, dessen Konzentration korrigiert wird, um in der Schlacke ein Massenverhältnis MnO/SiO₂ von 1,55 bis 1,70 zu erhalten.

9. Vorrichtung zur Verwertung verbrauchter Alkali- und/oder Salzbatterien, gegebenenfalls unter Zugabe verbrauchter NiMH-Akkumulatoren, wobei die Vorrichtung umfasst:
- einen Metallschmelzofen, der ein flüssiges Metallbad umfasst oder bestimmt ist, zu umfassen, das wenigstens Eisen, Nickel und Mangan umfasst, wobei das flüssige Metallbad auf der Oberfläche von einer Schlacke bedeckt ist, die Mangan in oxidierter Form und Siliziumoxid umfasst, wobei der Ofen im oberen Teil ein Gewölbe umfasst und im unteren Teil einen Kessel umfasst, der das geschmolzene Metall umfasst oder bestimmte ist, zu umfassen;
- ein Beschickungssystem, das für die Beschickung mit verbrauchten Alkali- und/oder Salzbatterien, gegebenenfalls unter Zugabe verbrauchter NiMH-Akkumulatoren, durch das Gewölbe des Ofens ausgelegt ist;
- ein System zum Rühren des flüssigen Metallbads in dem Kessel;
- ein Entnahmesystem, das dazu ausgelegt ist, Schlacke auf der Oberfläche des flüssigen Metallbads zu entnehmen;
- ein System zum Oxidieren der Gase im Gewölbe des Ofens;
- ein System zum Verarbeiten der im Gewölbe des Ofens oxidierten Gase, wobei das System zum Verarbeiten der Gase eine Sauerstoffzufuhr und eine Anordnung eines von einem Kühlfluid gekühlten Abschnitts und einen oder mehrere Filter umfasst.

10. Vorrichtung nach Anspruch 9, **dadurch gekennzeichnet, dass** der Metallschmelzofen ein elektrischer Lichtbogenofen ist.

11. Vorrichtung nach einem der Ansprüche 9 bis 10, **dadurch gekennzeichnet, dass** das Rührsystem eine oder mehrere poröse Vorrichtungen umfasst, durch die ein gegenüber den chemischen Elementen des flüssigen Metallbads inertes Gas eingeleitet werden kann.

12. Vorrichtung nach einem der Ansprüche 9 bis 11, **dadurch gekennzeichnet, dass** das Entnahmesystem eine Überlaufvorrichtung der Schlacke auf der Oberfläche des flüssigen Metallbads umfasst.

13. Vorrichtung nach einem der Ansprüche 9 bis 12, **dadurch gekennzeichnet, dass** das Verarbeitungssystem der Gase eine Vorrichtung zum Steuern der Sauerstoffeinleitung umfasst.

## Claims

1. Process for recovering used alkaline and/or saline batteries, possibly with added used NiMH accumulators, said process including:
- the addition of used alkaline and/or saline batteries, possibly with the addition of used NiMH accumulators, to the surface of a slag surfacing a liquid metal bath, the addition of the batteries, and/or possibly of the accumulators, providing at least metal elements comprising iron, nickel, zinc and manganese to the liquid metal bath, the addition of the batteries and optionally the accumulators being carried out in a metal melting furnace comprising an oxidizing atmosphere; the addition being supplemented with silicon (Si);
said liquid metal bath comprising reducing elements which reduce the metal elements to a non-oxidized form;
- stirring of the liquid metal bath bringing the liquid metal bath, including the manganese, into contact with the oxidizing atmosphere of the furnace to oxidise the manganese and produce MnO in the slag;
- drawing off the slag in which the manganese is oxidized, the said drawn-off slag having a composition comprising more than 20% by mass of MnO relative to the total mass of the drawn-off slag;
- recovery of gases escaping from the liquid metal bath and/or the slag, said gases comprising zinc, and its oxidation to zinc oxide, typically ZnO.

2. Process according to claim 1, **characterized in that** it comprises one or more cycles, the start of a cycle comprising the formation of a starting charge of the bath of liquid metal and the end of a cycle comprising the casting of a ferronickel alloy from the liquid metal bath.

3. Process according to claim 2, **characterized in that** the ferronickel alloy comprises more than 20% by mass of nickel relative to the total mass of the alloy, and preferably less than 3% of other alloy metals, such as cobalt, manganese and copper.

4. Process according to any one of the preceding claims, **characterized in that** the slag has a composition comprising more than 40% by mass of MnO relative to the total mass of the slag drawn off.

5. Process according to any one of the preceding claims, **characterized in that** the zinc oxide is recovered from the fumes in the form of dust comprising more than 80% by mass of ZnO relative to the total mass of the dust.

6. Process according to any one of the preceding claims, **characterized in that** the batteries and/or accumulators are added by gravity pouring through the vault of the furnace, preferably so as to distribute the batteries and/or accumulators on the surface of the slag.

7. Process according to any one of the preceding claims, **characterized in that** the liquid metal bath is stirred by one or more porous devices through which a gas inert to the chemical elements of the liquid metal bath is injected.

8. Process according to any one of the preceding claims, **characterized in that** the liquid metal bath comprises silicon, the concentration of which is adjusted to obtain a MnO/SiO mass ratio of 1.55 to 1.70 in the slag.

9. Device for recovering used alkaline and/or saline batteries, possibly with added used NiMH accumulators, said device comprising:
- a metal melting furnace comprising or intended to comprise a liquid metal bath comprising at least iron, nickel, and manganese, the said liquid metal bath being surfaced with a slag comprising manganese in oxidized form and silica, said furnace comprising, in the upper part, a vault and, in the lower part, a vessel containing or intended to contain the molten metal;
- a charging system configured for charging used alkaline and/or saline batteries, possibly with the addition of used NiMH batteries, through the furnace vault; a system for stirring the liquid metal bath in the vessel;
- a drawing off system configured to draw off slag on the surface of the liquid metal bath;
- a gas oxidation system in the furnace vault;
- a system for treating the gases oxidized in the furnace vault, said gas treatment system comprising an oxygen inlet, and an assembly of a section cooled by a refrigerant fluid and one or several filters.

10. Device according to claim 9, **characterized in that** the melting furnace is an electric arc furnace.

11. Device according to any one of claims 9 to 10, **characterized in that** the stirring system comprises one or more porous devices through which a gas inert to the chemical elements of the molten metal can be injected.

12. Device according to any one of claims 9 to 11, **characterized in that** the drawing off system comprises a device for overflowing the slag onto the surface of the liquid metal bath.

13. A device according to any one of claims 9 to 12, **characterized in that** the gas treatment system comprises a device for controlling the oxygen intake.
